**Europäisches Patentamt**

**European Patent Office**

**Office européen des brevets**

(11) Numéro de publication: **0 053 959**

**B1**

# (12) FASCICULE DE BREVET EUROPEEN

(45) Date de publication du fascicule du brevet: **13.02.85**

(21) Numéro de dépôt: **81401805.7**

(22) Date de dépôt: **17.11.81**

(51) Int. Cl.⁴: **H 04 L 7/02**

(54) **Dispositif de récupération d'un signal d'horloge à partir d'un signal binaire.**

(30) Priorité: **09.12.80 FR 8026075**

(43) Date de publication de la demande:
**16.06.82 Bulletin 82/24**

(45) Mention de la délivrance du brevet:
**13.02.85 Bulletin 85/07**

(84) Etats contractants désignés:
**AT BE CH DE GB IT LI LU NL SE**

(56) Documents cités:
**DE-B-2 824 137**
**FR-A-2 212 702**
**GB-A-1 103 520**

(73) Titulaire: **THOMSON-CSF**
**173, Boulevard Haussmann**
**F-75379 Paris Cedex 08 (FR)**

(72) Inventeur: **Rougeolle, Daniel**
**THOMSON-CSF SCPI 173, bld Haussmann**
**F-75360 Paris Cedex 08 (FR)**

(74) Mandataire: **Turlèque, Clotilde et al**
**THOMSON-CSF SCPI 173, Bld Haussmann**
**F-75379 Paris Cedex 08 (FR)**

Courier Press, Leamington Spa, England.

## Description

La présence invention concerne les dispositifs de récupération d'un signal d'horloge à partir d'un signal binaire fourni par un système de transmission de données binaires, en particulier un système utilisant un canal de transmission du type magnétoscope.

Ces systèmes de transmission nécessitent de reconstituer un signal d'horloge locale restituant le rythme des données binaires émises à l'entrée du canal de transmission. Ce signal d'horloge locale doit être asservi en fréquence et en phase sur le signal d'horloge d'émission de manière à permettre, à partir du signal de sortie du canal, une détermination convenable des valeurs des données émises. Quel que soit le mode de transmission utilisé, le signal binaire reconstitué à la réception comporte des transitions de signal (passage de l'état 0 à l'état 1 et vice-versa) espacées d'un multiple entier de la période du signal d'horloge d'émission et donc du signal d'horloge locale à reconstituer.

Une solution bien connue de récupération du signal d'horloge locale désiré consiste à détecter les transitions du signal binaire reçu, et à diviser la fréquence d'un signal d'horloge issu d'un oscillateur fournissant une fréquence q fois plus élevée que la fréquence du signal d'horloge locale désiré à l'aide d'un diviseur à nombre diviseur variable. La valeur de ce nombre diviseur variable est commandée par un signal de commande fourni par un détecteur de la position des transitions du signal de données par rapport au front montant du signal d'horloge locale obtenu à la sortie du diviseur, afin de faire varier la fréquence et par suite la phase de ce signal d'horloge locale.

Mais cette méthode n'est pas utilisable lorsque la fréquence du signal d'horloge locale à récupérer est très élevée, cela impliquerait l'emploi d'un oscillateur de fréquence trop élevée. Par exemple, cette méthode est inutilisable dans le cas des systèmes à magnétoscope numérique.

Une autre solution consiste à utiliser des filtres étroits (filtre à quartz) permettant d'extraire du signal de sortie du canal un signal d'horloge locale dont la fréquence et la phase sont celles du signal d'horloge d'émission.

Mais la mise en oeuvre de procédés de filtrage à bande étroite est coûteuse. De plus, certains canaux, notamment les magnétoscopes numériques, génèrent des modulations parasites qui affectent les transitions de signal. Par exemple, le signal binaire transmis par un magnétoscope est très fluctuant. Ce signal est affecté d'une modulation de phase à basse fréquence (quelques KHz) qui ne permet pas d'utiliser des filtres étroits pour récupérer le signal d'horloge locale.

Une troisième solution, consiste à utiliser un oscillateur dont la fréquence est commandable par une tension. Des moyens logiques fournissent un premier et un deuxième signal binaire fonctions, respectivement, de l'écart de phase et de l'écart de fréquence. La tension de commande de l'oscillateur est élaborée par un circuit de commande d'accord, en fonction du premier signal dans le cas où l'écart de fréquence est faible, et en fonction du second signal dans le cas contraire. Selon un mode de réalisation décrit dans le brevet britannique n° 1 103 520, ces moyens logiques fournissent un premier et un second signal logique dont le rapport cyclique est fonction, respectivement, de l'écart de fréquence et de l'écart de phase. Les moyens logiques générant ces deux signaux binaires comportent un nombre élevé de bascules et de portes, qui empêche leur utilisation à une fréquence élevée. D'autre part, l'oscillateur fonctionne à une fréquence quatre fois plus élevée que le rythme des bits, ce qui rend sa réalisation délicate quand ce rythme est élevé.

La présente invention a pour objet un autre mode de réalisation de cette troisième solution, qui peut fonctionner pour des fréquences élevées.

Selon l'invention, un dispositif de récupération d'un signal d'horloge locale H à partir d'un signal binaire S comportant un circuit oscillateur à accord électronique ayant une entrée de commande d'accord et une sortie délivrant le signal d'horloge locale H; des premiers moyens logiques ayant une première et une deuxième entrée recevant respectivement le signal binaire S et le signal d'horloge locale H, et une sortie délivrant un signal logique $S_1$ traduisant le signe de l'écart de phase entre les signaux S et H; et des seconds moyens logiques ayant une première entrée, une deuxième entrée recevant le signal H, et ayant une sortie délivrant un signal logique $S_3$, comportant une bascule et traduisant le signe de l'écart de fréquence entre les signaux S et H; un circuit de commutation ayant une première et une deuxième entrée recevant respectivement les signaux logiques $S_1$ et $S_3$ et ayant une sortie délivrant l'un des signaux $S_1$ et $S_3$; un circuit de commande, pour commander le circuit de commutation; et un circuit de commande d'accord du circuit oscillateur, ayant une entrée couplée à la sortie du circuit de commutation, et une sortie couplée à l'entrée de commande du circuit oscillateur et délivrant une tension de commande d'accord; est caractérisé en ce que la bascule a une entrée de données constituant ladite deuxième entrée des seconds moyens logiques, une entrée d'horloge constituant ladite première entrée des seconds moyens logiques, étant couplée à la sortie des premiers moyens logiques, et une sortie délivrant un signal intermédiaire d'information de fréquence $S_2$; que les seconds moyens logiques comprennent en outre un filtre pour filtrer le signal $S_2$, ayant une sortie délivrant un signal $SF_2$; et un circuit de mise en forme logique du signal $SF_2$, ayant une sortie, constituant la sortie des seconds moyens logiques, couplée à l'entrée du circuit de commande de commutation.

L'invention sera mieux comprise et les caractéristiques apparaîtront à l'aide de la description ci-après et des figures s'y rapportant qui représentent:

— la figure 1, un schéma synoptique du dispositif selon l'invention,
— la figure 2, un mode de réalisation du dispositif selon l'invention,
— les figures 3, 4, 5, 6, 7, 8 et 11, des diagrammes de temps de signaux permettant de mieux comprendre le fonctionnement du dispositif selon l'invention,
— la figure 9, un autre mode de réalisation du dispositif selon l'invention,
— la figure 10, une variante de réalisation de l'un des éléments du dispositif selon l'invention.

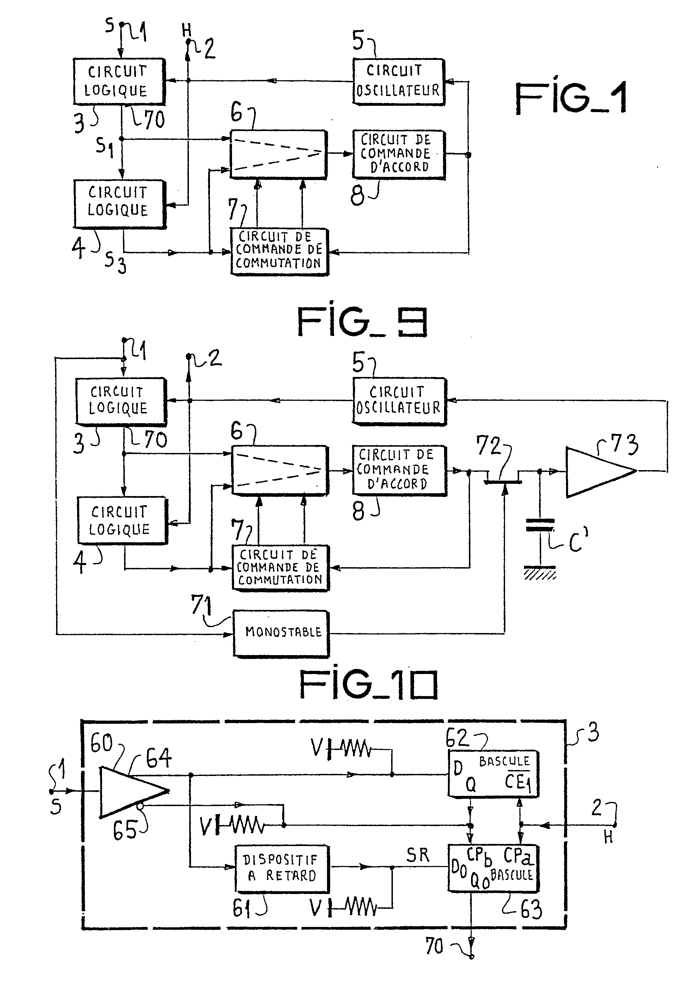

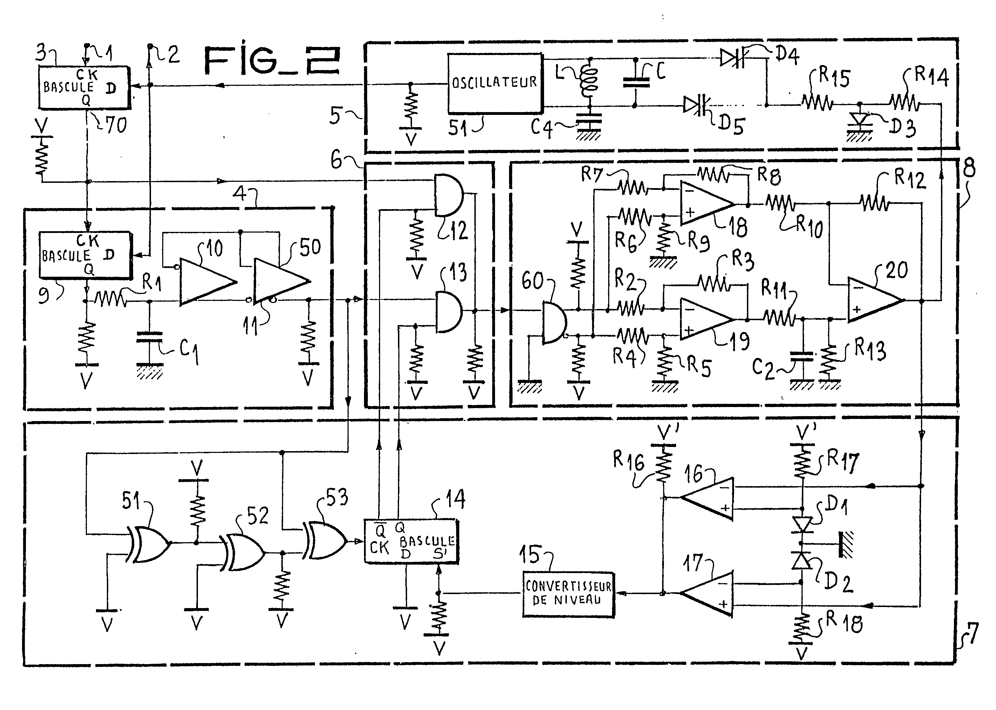

La figure 1 représente le schéma synoptique du dispositif selon l'invention.

Le dispositif comporte un circuit oxcillateur à accord électronique 5 ("voltage controlled oscillator" en littérature anglaise) dont la sortie est couplée à une borne de sortie 2 du dispositif et délivre le signal d'horloge locale désiré H. La tension de commande du dispositif d'accord électronique de l'oscillateur 5 est obtenue à partir du signal binaire S récupéré à la sortie du canal de transmission. Ce signal S est constitué d'une suite d'états de 1 et de 0 correspondant aux valeurs des données émises. La durée des états est un multiple entier de la période du signal d'horloge d'émission. Tous les fronts montants et descendants de ce signal binaire S sont donc en phase avec les fronts montants et descendants du signal d'horloge d'émission.

Comme indiqué sur la figure 1, la tension de commande de l'accord du circuit oscillateur 5 est générée par un circuit de commande d'accord 8 dont la sortie est couplée à une entrée de commande du circuit oscillateur 5. L'entré de ce circuit de commande 8 est reliée à la sortie d'un circuit de commutation 6 dont les première et deuxième entrées sont respectivement couplées à la sortie d'un premier circuit logique 3 et à la sortie d'un deuxième circuit logique 4. Le premier circuit logique 3 comporte des première et deuxième entrées respectivement couplées à une borne d'entrée 1 destinée à fournir le signal S et à la sortie du circuit oscillateur 5. La sortie de ce premier circuit logique 3 délivre un signal $S_1$ dont l'état est fonction de l'écart de phase entre le signal binaire S et le signal d'horloge locale H fourni par le circuit oscillateur 5. Le deuxième circuit logique 4 comporte des première et deuxième entrées respectivement couplées à la sortie du premier circuit logique 3 et à la sortie du circuit oscillateur 5. La sortie de ce deuxième circuit logique 4 délivre un signal $S_3$ dont l'état est fonction de l'écart de fréquence entre le signal d'horloge locale H et le signal binaire S.

Le circuit de commutation 6 est commandé de façon à fournir à l'entrée du circuit de commande d'accord 8 soit le signal $S_1$, soit le signal $S_3$. Cette commande de commutation est effectuée par un circuit de commande de commutation 7 dont les première et deuxième sorties sont respectivement couplées à des première et deuxième entrées de commande du circuit de commutation 6. Le circuit de commande de commutation 7 comporte en outre des première' et deuxième entrées respectivement couplées à la sortie du deuxième circuit logique 4 et à la sortie du circuit de commande d'accord 8.,

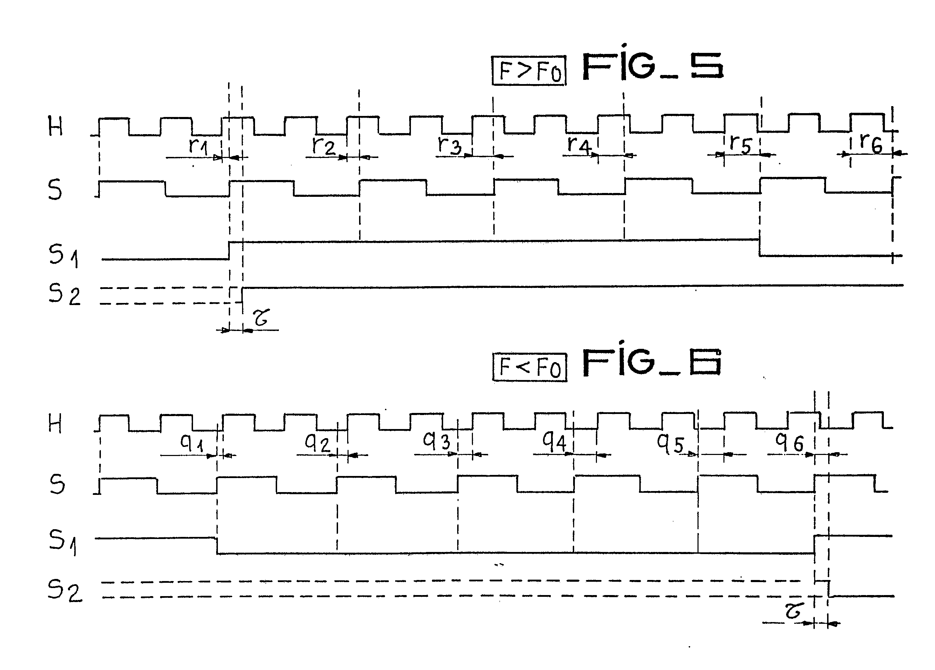

Le principe de fonctionnement du dispositif qui vient d'être décrit sera mieux compris à l'aide des diagrammes de temps représentés sur les figures 3, 4, 5, 6, 7 et 8.

Les diagrammes de temps des figures 3 et 4 représentent les trois signaux H, S et $S_1$.

Le signal H correspond au signal d'horloge locale fourni par le dispositif selon l'invention. Le signal S correspond au signal binaire reçu à la sortie du canal de transmission. Quant au signal $S_1$, il correspond à l'information de phase entre les signaux H et S, c'est-à-dire au signal fourni par le circuit logique 3.

Sur ces deux figures, la fréquence F du signal H est considérée égale à la fréquence $F_o$ du signal d'horloge locale désirée ($F_o$ correspond donc à la fréquence de signal d'horloge d'émission). De plus, afin de faciliter la compréhension des figures, le signal S a été représenté dans le cas où il est constitué alternativement d'une suite d'états 1 et 0 dont la durée est égale à une période $1/F_o$ du signal d'horloge locale désirée. Cette représentation du signal S sera aussi utilisée sur les figures 4, 5, 6, 7 et 8, suivantes. Il est à noter que lors d'une transmission d'une suite de données quelconque, la forme du signal binaire ne sera pas aussi régulière que celle représentée. Cependant, les transitions de signal auront toujours lieu à des instants espacés d'un multiple entier de la période du signal d'horloge d'émission (c'est-à-dire du signal d'horloge locale désirée), de sorte que les explications qui vont être données resteront valables.

Considérer que la fréquence F du signal H est égale à $F_o$ revient à considérer que le mouvement relatif du signal S par rapport au signal H est nul. Une information de phase entre les signaux H et S peut être facilement obtenue en mémorisant l'état du signal H à chaque front montant du signal S (il est équivalent d'utiliser les fronts descendants).

En effet, si le signal H est en retard par rapport au signal S, ce qui est le cas de la figure 3, le signal H à chaque front montant du signal S est à l'état logique 0. Il s'ensuit que le signal $S_1$, qui traduit l'information de phase entre les signaux H et S est à l'état 0.

Si le signal H est en avance par rapport au signal S comme représenté sur la figure 4, l'état du signal H à chaque front montant du signal S est l'état logique 1. Il en découle que dans ce deuxième cas le signal $S_1$ est à l'état logique 1.

Cette information de phase est fournie par le premier circuit logique 3 et peut être utilisée pour effectuer un verrouillage en phase du signal H par rapport au signal S. Il suffit pour cela de piloter le circuit oscillateur 5 avec le signal $S_1$ de telle sorte que lorsque $S_1$ est à l'état logique 0 la fréquence du circuit oscillateur 5 augmente, et qu'elle diminue lorsque $S_1$ est à l'état logique 1. Il en résulte un verrouillage des fronts montants du signal H sur les fronts montants du signal S. En prenant des conditions inverses, le verrouillage s'effectue sur les fronts descendants du signal H.

Cette information de phase permet à elle seule de réaliser un asservissement du circuit oscillateur 5 à condition que la fréquence F de ce dernier soit très proche de la fréquence $F_o$ du signal d'horloge locale désirée.

Lorsque F est différente de $F_o$, le mouvement relatif du signal S par rapport au signal H n'est plus nul, et l'information de phase, déduite de la même façon que précédemment, change constamment en fonction du glissement du signal H par rapport au signal S.

Sur chacune des figures 5 et 6 est représenté un diagramme de temps des signaux H, S, $S_1$ et $S_2$.

La figure 5 correspond au cas où la fréquence F du signal d'horloge H délivrée par le circuit oscillateur 5 est supérieure à celle du signal d'horloge locale désiré ($F>F_o$). Dans l'exemple considéré le signal S correspond à une suite de bits de valeurs 0 et 1 alternativement. Le premier front montant du signal S est synchrone avec un front montant du signal H. Le deuxième front montant du signal S, a un retard $r_1$ par rapport au front montant du signal H qui devrait lui être synchrone. Les fronts montant suivant, du signal S, ont des retards temporels $r_2$, $r_3$, $r_4$, $r_5$, $r_6$, qui sont croissants. Les deuxième, troisième, quatrième et cinquième fronts montants du signal S provoquent la mémorisation de la valeur H=1 qui constitue le signal $S_1$. Le retard $r_5$ étant supérieur à une demi-période d'horloge, le sixième front montant du signal S provoque la mémorisation de la valeur H=0, pour constituer la nouvelle valeur de $S_1$. La valeur du retard continuant à croître, elle atteint ensuite et dépasse une période, le signal $S_1$ reprend alors la valeur H=1. L'écart entre la fréquence du signal H et le rythme de signal S étant faible, les retards $r_1$, $r_2$ etc..., croissent avec un faible pas. Le passage au niveau 1 du signal $S_1$ a donc lieu peu de temps après un front montant du signal H et le passage au niveau 0 a lieu peu de temps après un front descendant du signal H.

La figure 6 correspond au cas où F est inférieure à $F_o$.

Dans cet exemple les fronts montant du signal S ont une avance croissante par rapport aux fronts montant du signal H. ($a_1$, $a_2$, etc...). Le deuxième front montant du signal S a une avance $a_1$ par rapport au front montant du signal H qui devrait lui être synchrone, il provoque donc la mémorisation de la valeur H=0 pour constituer le signal $S_1$. Les deuxième, troisième, quatrième, cinquième et sixième fronts montant du signal S provoquent la mémorisation de la même valeur H=0. L'avance $a_6$ du sixième front montant du signal S étant légèrement supérieure à une demi période, ce front provoque la mémorisation d'une valeur H=1, pour constituer le signal $S_1$. La valeur de l'avance croissant avec un faible pas, le passage au niveau 1 du signal $S_1$ a lieu peu de temps avant un front descendant du signal H.

Pour distinguer si $F<F_o$ ou $F>F_o$ il suffit donc de détecter si le front montant de $S_1$ est précédé d'un front montant du signal H, ou suivi d'un front descendant. Cette discrimination est réalisée en mémorisant l'état du signal H après chaque front montant du signal $S_1$ avec un délai $\tau$ ($\tau \ll 1/F_o$). Le signal obtenu est $S_2$, représenté sur les figures 5 et 6. Si un front montant du signal H précède un front montant de $S_1$, $S_2$ passe au niveau 1 (figure 5). Si un front descendant de H suit un front montant de $S_1$, avant la fin du délai $\tau$, $S_2$ passe au niveau 0 (figure 6). Dans cet exemple de réalisation le délai $\tau$ est constitué par le temps de transit du signal logique $S_1$ à travers une bascule. La plage de capture de l'asservissement en fréquence est d'autant plus large que le délai $\tau$ est plus faible. Il est équivalent d'utiliser les fronts descendants, il est même possible d'utiliser les fronts montants et descendants pour avoir un maximum d'information. Il apparaît que dans le cas où F est supérieure à $F_o$ (figure 5), l'état du signal $S_2$ est 1, et que dans le cas où F est inférieure à $F_o$ (figure 6), l'état du signal $S_2$ est 0. Ce signal $S_2$ peut être considéré comme une information de fréquence et peut asservir le circuit oscillateur 5.

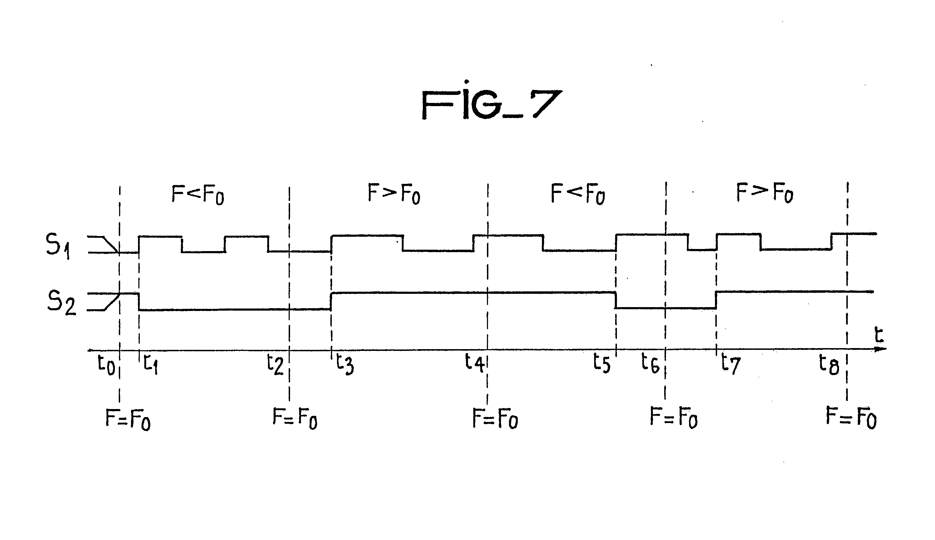

Cette information de fréquence pilotant le circuit oscillateur 5, la fréquence F du signal de sortie de ce dernier oscille de part et d'autre de la valeur $F_o$, et l'état du signal $S_2$ change en permanence, par exemple comme indiqué par le diagramme des signaux $S_1$ et $S_2$ représenté sur la figure 7.

Sur ce diagramme, les signaux $S_1$ et $S_2$ sont représentés à partir d'un instant $t_0$. Entre les instants $t_0$ et $t_2$ et entre les instants $t_4$ et $t_6$, la fréquence F du signal H est inférieure à $F_o$. Entre les instants $t_2$ et $t_4$ et entre les instants $t_6$ et $t_8$, la fréquence F est supérieure à $F_o$. Aux instants $t_0$, $t_2$, $t_4$, $t_6$ et $t_8$, F est égale à $F_o$.

Sur cette figure, il apparaît qu'un asservissement du circuit oscillateur 5 par le signal $S_2$ n'est pas suffisant. En effet, les changements d'état du signal $S_2$ (instants $t_1$, $t_3$, $t_5$ et $t_7$) n'ont pas lieu aux instants auxquels F est égale à $F_o$. Le système présente de l'hystérésis. Il est nécessaire qu'il y ait eu un glissement du signal H par rapport au signal S (glissement qui peut atteindre une demi période du signal d'horloge d'émission) avant que le signal $S_2$ change d'état et indique ainsi que F est égale à $F_o$. Dans cet exemple sur la figure 6, il s'écoule un temps égale à 12 périodes d'horloge avant que le signal $S_2$ indique que F est inférieure à $F_o$.

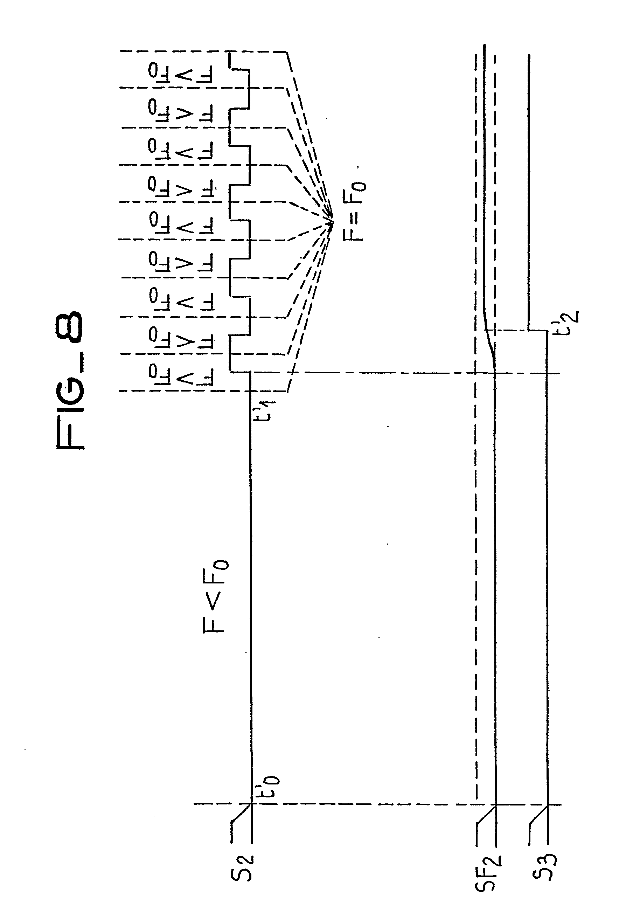

Afin de réaliser une commande convenable de l'accord électronique du circuit oscillateur 5, il faut combiner l'information de phase (signal $S_1$) et l'information de fréquence (signal $S_2$). Il s'agit de commander le circuit oscillateur 5 avec l'information de phase lorsque F est très proche de $F_o$ et avec l'information de fréquence lorsque F est soit bien inférieure, soit bien supérieure à $F_o$. Dans ce but, le circuit de commande de commutation 7 commande le circuit de commutation 6 afin qu'il fournisse à l'entrée du circuit de commande d'accord 8 soit le signal $S_1$, soit le signal $S_3$ associé au signal $S_2$ comme indiqué sur la figure 8.

Sur cette figure, est représenté un diagramme de temps des signaux $S_2$, $SF_2$ et $S_3$.

La forme du signal $S_2$ correspond au cas où le signal $S_2$ est utilisé pour piloter le circuit oscillateur 5. Entre les instants $t'_0$ et $t'_1$, la fréquence F du signal H est considérée être inférieure à $F_o$. Après l'instant $t'_1$, F oscille autour de $F_o$, l'état du signal $S_2$ change constamment.

Le signal $SF_2$ correspond au signal $S_2$ après un filtrage de celui-ci. Quand au signal $S_3$, il correspond à une mise en forme logique du signal $SF_2$. Le filtrage du signal $S_2$ permet d'une part d'éliminer les informations parasites qui altèrent le signal $S_2$, et d'autre part une détection facile de la zone dans laquelle F oscille autour de $F_o$, c'est-à-dire de la zone dans laquelle F est proche de $F_o$. La valeur du signal $SF_2$ est comparée à un seuil fixe ayant une valeur médiane entre les valeurs correspondant aux niveaux logiques 0 et 1. Quand F est très inférieure à $F_o$ le signal $S_3$ a un niveau 0 stable. Quand F est très supérieure à $F_o$ le signal $S_3$ a un niveau 1 stable. Quand F se rapproche de $F_o$, puis oscille autour de $F_o$, la valeur de la tension du signal $SF_2$ fluctue autour de la valeur médiane, le signal $S_3$ subit alors des transitions. Le signal $S_3$ traduit donc deux informations de fréquence—

— s'il a un niveau stable, sa valeur traduit le signe de l'écart de fréquence.
— s'il change de niveau, cette transition traduit le passage de la fréquence F par la valeur $F_o$.

La première information permet de commander une augmentation ou une diminution de la fréquence de l'oscillateur.

La deuxième information permet de déterminer l'instant où l'asservissement de phase doit prendre le relais de l'asservissement de fréquence.

Ce signal $S_3$, qui est généré par le deuxième circuit logique 4, est utilisé, selon le principe de l'invention, par le circuit de commande 7 pour commander le circuit de commutation 6. Cette commande s'effectue de façon que le circuit de commutation 6 fournisse le signal $S_3$ à l'entrée du circuit de commande d'accord 8 tant que l'état de ce signal $S_3$ reste stable, au niveau 0 ou au niveau 1. Dès que l'état de ce signal $S_3$ change, le circuit de commutation 6 fournit le signal $S_1$ à l'entrée du circuit de commande d'accord 8. Ainsi, ce circuit 8 délivre une tension de commande de l'accord électronique du circuit oscillateur 5 qui est fonction de l'information de fréquence (signal $S_3$) lorsque F est bien supérieure ou bien inférieure à $F_o$, puis qui est fonction de l'information de phase (signal $S_1$) dès que F est proche de $F_o$.

Inversement, dans le cas où la tension de commande est fonction de l'information de phase et que F redevient bien inférieure ou bien supérieure à $F_o$, le circuit de commande de commutation 7 est conçu de façon à pouvoir commander le circuit de commutation 6 pour qu'il délivre à nouveau le signal $S_3$, c'est-à-dire pour que le circuit oscillateur 5 soit de nouveau asservi par l'information de fréquence. Cette commande de commutation est effectuée lorsque la tension de commande de l'accord du circuit oscillateur 5 (présente sur la deuxième entrée du circuit 7) est soit inférieure à $V_o$–0,7V ($V_o$ étant la tension de commande lorsque F est égale à $F_o$), soit supérieure à $V_o$+0,7V, ce qui signifie que la valeur de F n'est plus très proche de $F_o$.

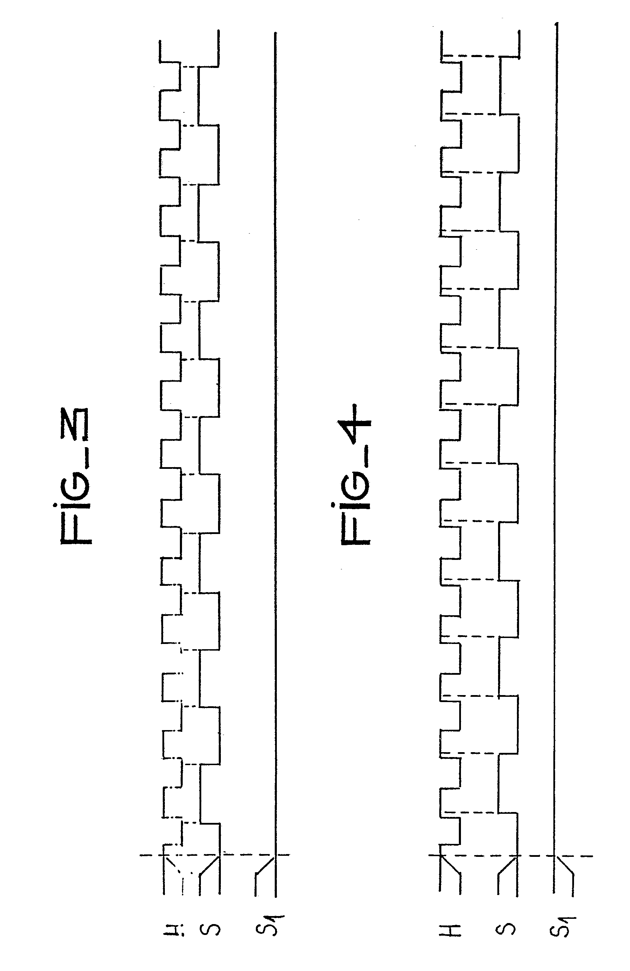

Sur la figure 2, est représenté un mode de réalisation du dispositif selon l'invention mettant en oeuvre le principe qui vient d'être exposé.

Sur cette figure, il apparaît de nouveau les circuits du schéma synoptique montré sur la figure 1, mais cette fois-ci les éléments constituant ces circuits sont détaillés.

Par ailleurs, il faut noter que les résistances non repérées correspondent à des résistances de charge qu'il est nécessaire de placer à la sortie des éléments E.C.L. ("Emitter Couplage Logic" en littérature anglaise), et que le couplage de deux sorties des éléments E.C.L. réalise un OU logique.

Dans ce mode de réalisation du dispositif, le premier circuit logique 3 est une bascule 3 de type D. Une bascule de type D est une bascule dont le niveau du signal de sortie prend la valeur du signal d'entrée à chaque apparition d'un front montant du signal d'horloge fourni à l'entrée d'horloge de la bascule.

L'entrée D de cette bascule 3 est couplée à la borne 1 qui est destinée à recevoir le signal binaire S. Son entrée d'horloge CK est reliée à la borne de sortie 2 qui est destinée à fournir le signal d'horloge locale désirée H. La sortie Q de la bascule 3 fournit le signal d'information de phase $S_1$ tel que défini précédemment.

Le deuxième circuit logique 4 est principalement réalisé à l'aide d'une bascule 9 de type D. Cette bascule 9 présente une entrée D reliée à la sortie de la bascule 3, une entrée d'horloge CK reliée à la borne de sortie 2 et une sortie Q qui délivre le signal $S_2$ tel que défini précédemment. Le circuit 4 comporte en outre une résistance $R_1$ dont la première extrémité est reliée à la sortie de la bascule 9, et une capacité $C_1$ couplant la deuxième extrémité de la résistance $R_1$ à la masse. Cette résistance $R_1$ et cette capacité $C_1$ réalisent un filtre pour filtrer le signal $S_2$ et pour fournir le signal $SF_2$ (figure 8).

La deuxième extrémité de la résistance $R_1$ est ensuite reliée à une première entrée d'un premier récepteur ligne E.C.L., 10, dont la sortie et la deuxième entrée complémentée sont respectivement reliées à la première entrée complémentée et à la deuxième entrée d'un deuxième circuit récepteur ligne E.C.L., 11. La deuxième entrée complémentée du récepteur ligne 10 est également reliée à une sortie 50 du récepteur ligne 11 destinée à fournir la moitié de la somme des valeurs présentes sur chacune des entrées du récepteur ligne 11. Ces deux récepteurs ligne qui font partie du circuit 4 permettent de générer sur la sortie complémentée du récepteur ligne 11 le signal d'information de fréquence $S_3$ tel que défini précédemment (figure 8).

Le circuit de commutation 6 est réalisé à l'aide de deux portes ET, 12 et 13.

Les première et deuxième entrées de la porte ET 12 sont respectivement couplées à la sortie de la bascule 3 et à la première sortie du circuit de commande de commutation 7. Les première et deuxième entrées de la porte ET 13 sont respectivement couplées à la sortie complémentée du deuxième récepteur ligne 11 et à la deuxième sortie du circuit de commande de commutation 7.

Ce circuit de commande de commutation 7 est principalement réalisé à l'aide d'une bascule 14 de type D. Les sorties Q et $\overline{Q}$ de cette bascule 14 correspondent respectivement aux première et deuxième sorties du circuit de commande de commutation 7. Ces sorties permettent donc de commander respectivement les portes 12 et 13.

L'entrée D de la bascule 14 est reliée à une source de potentiel V. Quand à l'entrée d'horloge CK de cette bascule 14, elle est couplée à la sortie d'une porte OU exclusif, 53, dont les première et deuxième entrées sont respectivement reliées à la sortie complémentée du récepteur ligne 11 et à la sortie d'une porte OU exclusif, 52. Les première et deuxième entrées de cette porte OU exclusif, 52, sont respectivement reliées à la sortie d'une porte OU exclusif, 51, et à la source de potentiel V. Les premières et deuxième entrées de la porte OU exclusif, 51, sont respectivement couplées à la sortie complémentée du récepteur ligne 11 et à la source de potentiel V.

Ce montage, composé de portes OU exclusif, permet de générer sur l'entrée d'horloge CK de la bascule 14 un front montant dès qu'il apparaît soit un front montant soit un front descendant sur le signal $S_3$. En effet, les portes OU exclusif 51 et 52 ne servent qu'à retarder

faiblement le signal $S_3$ de sorte que la porte OU exclusif 53, dont les première et deuxième entrées reçoivent respectivement le signal $S_3$ et le signal $S_3$ retardé, commande la bascule 14 chaque fois qu'un front montant ou descendant apparaît sur le signal $S_3$. Les sorties Q et $\overline{Q}$ de la bascule 14 restent dans l'état 0 et l'état 1, respectivement, tant qu'une impulsion n'arrive pas sur l'entrée S' de remise à 1.

Selon le principe présenté précédemment, cette bascule 14 permet donc de commander les portes ET, 12 et 13, afin que l'entrée du circuit de commande d'accord 8, qui est couplée à la sortie de la porte 12 et à la sortie de la porte ET, 13, reçoive le signal $S_3$ lorsque la fréquence F du signal H est bien inférieure ou bien supérieure à la fréquence $F_o$, et le signal $S_1$ lorsque cette fréquence F est proche de $F_o$.

A partir de ces signaux $S_1$ et $S_3$ et de leur inverse, le circuit de commande d'accord 8 génère la tension de commande de l'accord électronique du circuit oscillateur 5.

Pour cela, le circuit de commande d'accord 8 comporte une porte ET, 60, fournissant soit le signal $S_1$ et son inverse, soit le signal $S_3$ et son inverse, et un circuit d'amplification constitué d'amplificateurs 18, 19 et 20 montés en amplificateur différentiel.

Les première et deuxième entrées de la porte ET, 60, sont respectivement reliées à la sortie du circuit de commutation 6 et à la masse. Une sortie de cette porte ET, 60, est couplée à l'entrée "−" de l'amplificateur opérationnel 19 à travers une résistance $R_2$ et à l'entrée "+" de l'amplificateur opérationnel 18 à travers une résistance $R_6$. L'entrée "−" de l'amplificateur 18 est couplée à la sortie complémentée de la porte ET, 60, à travers une résistance $R_7$ et à la sortie de l'amplificateur 18 à travers une résistance $R_8$. La sortie "+" de cet amplificateur 18 est en outre couplée à la masse à travers une résistance $R_9$. L'entrée "+" de l'amplificateur 19 est couplée à une sortie complémentée de la porte ET, 60, à travers une résistance $R_4$ et à la masse à travers une résistance $R_5$. L'entrée "−" de cet amplificateur 19 est en outre couplée à sa sortie à travers une résistance $R_3$.

La sortie de l'amplificateur 18 est couplée à l'entrée "−" de l'amplificateur 20 à travers une résistance $R_{10}$. L'entrée "−" de cet amplificateur 20 est en outre couplée à sa sortie à travers une résistance $R_{12}$. L'entrée "+" de l'amplificateur 20 est couplée à la sortie de l'amplificateur 19 à travers la résistance $R_{11}$ et à la masse à travers une résistanc $R_{13}$ et une capacité $C_2$ montés en parallèle. La sortie de l'amplificateur 20 est en outre couplée à l'entrée du circuit oscillateur 5.

Le circuit d'amplification ainsi constitué permet de générer la tension de commande de l'accord du circuit oscillateur 5 en moyennant le signal de l'information de phase $S_1$ ou de l'information de fréquence $S_3$. Les éléments de ce circuit d'amplification sont choisis de façon que le gain du circuit soit élevé à basse fréquence et faible à haute fréquence. A cette fin, l'amplificateur 18 et les résistances $R_6$, $R_7$, $R_8$ et $R_9$ constituent une première voie d'amplification, à faible gain et large bande-passante; l'amplificateur 19 et les résistances $R_2$, $R_3$, $R_4$ et $R_5$, $R_{11}$, $R_{13}$ et le condensateur $C_2$ constituent une deuxième voie d'amplification à fort gain et faible bande-passante; l'amplificateur 20 et les résistances $R_{10}$, $R_{12}$ et $R_{13}$, constituent un sommateur additionnant les signaux fournis par les deux voies d'amplification. Dans le cas d'un signal binaire S fourni par un magnétoscope, les fluctuations de fréquence sont dues à des dérives thermiques, des fluctuations mécaniques, etc, qui sont lentes mais qui ont une plage d'amplitude importante. Ces fluctuations sont compensées par le signal fourni par la deuxième voie d'amplification. D'autre part il y a des fluctuations de phase très rapides lors des commutations des têtes magnétiques tournantes pour lesquelles, par contre, une correction de faible amplitude suffit. Ces fluctuations sont compensées par le signal fourni par la première voie d'amplification.

Le circuit oscillateur à accord électronique 5 comporte un oscillateur 51 et un dispositif d'accord électronique constitué de deux résistances $R_{14}$ et $R_{15}$, d'une diode $D_3$, de deux diodes à capacité variable $D_4$ et $D_5$, d'une self L et d'une capacité $C_4$.

Les première et deuxième extrémités de la résistance $R_{14}$ sont respectivement reliées à la sortie de l'amplificateur 20 et à l'anode de la diode $D_3$ dont la cathode est reliée à la masse. L'anode de la diode $D_3$ est aussi reliée à la première extrémité de la résistance $R_{15}$ dont la deuxième extrémité est connectée à la cathode de la diode $D_4$ et à la cathode de la diode $D_5$. L'anode de la diode $D_4$ est reliée à une première entrée de l'oscillateur 51. L'anode de la diode $D_4$ est connectée à une seconde entrée de l'oscillateur 51. La self L et la capacité C sont montées en parallèle entre les première et deuxième entrées de l'oscillateur 51. La capacité $C_4$ couple la deuxième entrée de l'oscillateur 51 à la masse.

La valeur de la self L et la valeur de la capacité C sont telles que la fréquence d'oscillation est $F_o$ lorsque la valeur de la tension de commande générée par le circuit 8 est $V_o$. Une augmentation ou une diminution de la tension de commande engendre une variation de la capacité des diodes $D_4$ et $D_5$. Cette variation produit un désaccord du circuit constitué de la self L et de la capacité C, ce qui entraine une variation de la fréquence du signal de sortie de l'oscillateur 51. En conséquence, ce signal est asservi en fréquence et en phase sur le signal d'horloge d'émission et peut être utilisé pour déterminer les valeurs des données transmises.

Une fois le verrouillage en phase du système établi, il est nécessaire que le circuit de commande de commutation 8 puisse commander le circuit 6 afin qu'il délivre de nouveau le signal $S_3$ dans le cas où la fréquence F du signal fourni par l'oscillateur 51 devient très inférieure ou très supérieure à la fréquence désirée $F_o$. Dans ce but, le circuit 7 comporte des moyens de comparaison de la valeur de la tension de commande par rapport à $V_o-0,7V$ et $V_o+0,7V$. Lorsque la tension de commande est supérieure à $V_o+0,7V$ ou inférieure à $V_o-0,7V$, ces moyens de comparaison génèrent un signal de commande de remise à un de la sortie Q de la bascule 14, ce qui revient à commander le circuit de commutation 6 pour qu'il fournisse de nouveau le signal d'information de fréquence, $S_3$, à l'entrée du circuit 8.

Dans le mode de réalisation décrit sur la figure 2, les moyens de comparaison ont été réalisés à l'aide de deux comparateurs 16 et 17. L'entrée "—" du comparateur 16 et l'entrée "+" du comparateur 17 sont reliées à la sortie du circuit 8. L'entrée "+" du comparateur 16 est couplée à une source de potentiel V' à travers une résistance $R_{17}$ et à l'anode d'une diode $D_1$ dont la cathode est reliée à la masse. De même, l'entrée "—" du comparateur 17 est couplée à la source de potentiel V' a travers une résistance $R_{18}$ et à l'anode d'une diode $D_2$ dont la cathode est reliée à la masse. La sortie du comparateur 16 et la sortie du comparateur 17 sont couplées à la source de potentiel V' à travers une résistance $R_{16}$ et à l'entrée d'un convertisseur de niveau 15 dont la sortie est reliée à une entrée S' de la bascule 14.

Dans cette réalisation, la valeur $V_o$ est prise égale à zéro. Ainsi les comparateurs 16 et 17 comparent respectivement la tension de commande aux valeurs $-0,7V$ et $+0,7V$. Lorsque cette tension de commande est inférieure à $-0,7V$ ou supérieure à 0,7V, le comparateur 18 ou le comparateur 17 fournissent, à travers le convertisseur de niveau TTL-ECL, 15, (T.T.L: "Transistor-Transistor Logic" en littérature anglaise) un signal de commande de remise à 1 de la sortie Q de la bascule 14, appliqué à l'entrée S' de la bascule 14.

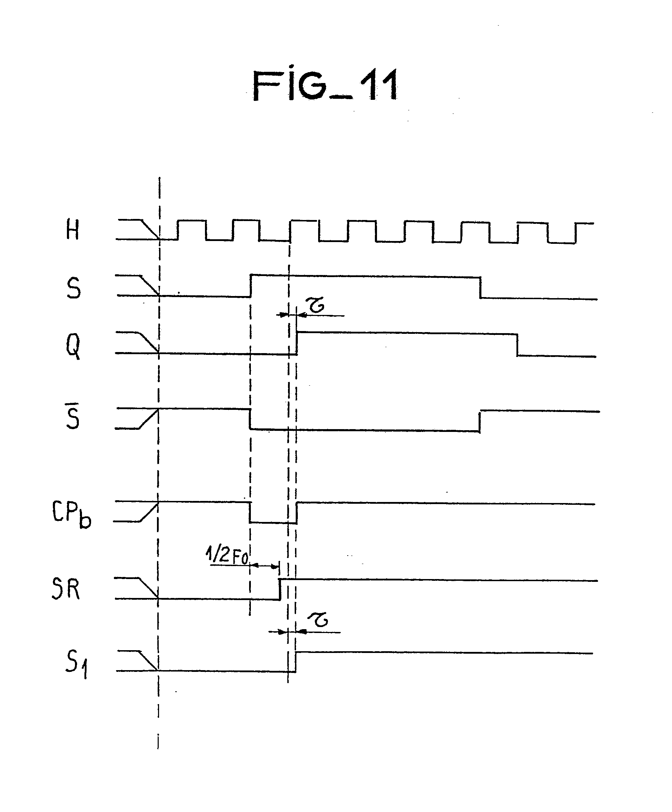

Il est à noter que le dispositif de récupération d'un signal d'horloge qui vient d'être décrit s'appuie uniquement sur les transitions du signal binaire S présent à la sortie du canal de transmission et ne nécessite aucune séquence de synchronisation particulière. Il continue à fonctionner même en l'absence de transition. Toutefois une absence prolongée de ces dernières entraine une dérive de l'oscillateur. Une amélioration consiste à détecter l'absence de transitions à l'aide d'un monostable redéclenchable et à bloquer la tension de commande du circuit oscillateur lorsqu'une telle absence est détectée. Un tel principe peut être facilement mis en oeuvre par la structure représentée sur la figure 9.

Sur cette figure, est de nouveau représenté le dispositif de récupération selon l'invention décrit sur la figure 1. Mais cette fois-ci la sortie du circuit de commande d'accord 8 n'est pas reliée directement à l'entrée du circuit oscillateur 5.

En effet, la sortie du circuit de commande 8 est couplée à l'entrée du circuit oscillateur 5 à travers le canal d'un transistor à effet de champ 72 et un amplificateur 73. Une capacité C', dont les extrémités sont respectivement reliées à l'entrée de l'amplificateur 73 et à la masse, est utilisée pour mémoriser la valeur de la tension de commande du circuit oscillateur 5. Quant à l'amplificateur opérationnel 73, il est inséré entre le transistor 72 et le circuit oscillateur 5 et sert d'adaptateur d'impédance.

Un monostable 71 dont l'entrée est couplée à la borne 1 est déclenché par les transitions du signal S. La sortie du monostable 71 est couplée à l'entrée de grille du transistor 72, de sorte que ce transistor 72 conduise tant que le monostable est déclenché. Dès que le signal S ne comporte plus de transitions pour déclencher le monostable 71, le transistor 72 est bloqué. La tension de commande fournie au circuit oscillateur 5 est alors celle mémorisée par la capacité C' tant que les transitions sont absentes sur la borne 1.

L'invention n'est pas limitée au mode de réalisation décrit et représenté, en particulier, il est à la portée de l'homme de l'art de réaliser un dispositif à l'aide de circuits de type T.T.L. lorsque la fréquence de travail le permet.

Il est aussi à la portée de l'homme de l'art d'extraire différemment des signaux d'information de phase et d'information de fréquence du type de ceux décrits.

Par exemple, le signal d'information de phase peut être obtenu en enregistrant l'état du signal S retardé d'une demi-période, $1/2F_o$, à l'instant auquel le premier front montant du signal d'horloge locale H, qui suit les fronts montants du signal binaire S, apparaît (il est équivalent d'utiliser les fronts descendants). La structure représentée sur la figure 10 permet de mettre en oeuvre un tel principe d'extraction.

Sur cette figure, sont représentés un récepteur ligne E.C.L., 64, deux bascules de type D, 62 et 63, et un dispositif à retard 61.

L'entrée D et la sortie Q de la bascule 62 sont respectivement reliées à la sortie 64 et à la sortie complémentée 65 du récepteur ligne 60 dont l'entrée est reliée à la borne 1. L'entrée d'horloge $\overline{CE}_1$ de la bascule 62 et l'entrée d'horloge $CP_a$ de la bascule 63 sont connectées à la borne de sortie 2 du dispositif de récupération selon l'invention. La sortie Q de la bascule 62 et la sortie complémentée 65 du récepteur ligne 60 sont reliées pour constituer une porte OU câblée alimentant l'entrée auxiliaire $CP_b$ de la bascule 63. La sortie 64 est en outre couplée à l'entrée $D_o$ de la bascule 63 à travers le dispositif à retard 61, de retard $1/2F_o$. La sortie $Q_o$ de la bascule 63 est reliée à la borne 70 qui correspond à la sortie du premier circuit logique 3 (figure 1).

Le fonctionnement de cette variante du circuit logique 3 sera mieux compris à l'aide du diagramme des temps représentés sur la figure 11.

Sur cette figure, sont représentés les signaux H, S, Q, $\overline{S}$, $CP_b$, SR et $S_1$ respectivement présents sur la borne 2, sur l'entrée D de la bascule 62, à la sortie Q de la bascule 62, sur la sortie 65 du récepteur ligne 60, à l'entrée $CP_b$ de la bascule 63, à l'entrée $D_o$ de la bascule 63 et à la sortie $Q_o$ de la bascule 63.

Les bascules 62 et 63 sont de type D. La sortie Q de la bascule 62 fournit donc le signal Q dont l'état correspond à celui du signal S à chaque instant auquel il apparaît au front montant du signal H. En couplant l'entrée $CP_b$ à la sortie Q de la bascule 62 et à la sortie complémentée 65 du récepteur ligne 60, il est réalisé une opération OU logique entre les signaux Q et $\overline{S}$. Quand au signal présent sur la sortie $Q_o$ de la bascule 63, il est formé en prenant l'état du signal retardé SR à chaque front montant du signal H présent sur l'entrée $CP_a$ de la bascule 63, à condition que le signal $CP_b$ soit à l'état 0, c'est-à-dire qu'un front montant du signal S ait été précédemment détecté.

Ce signal de sortie de la bascule 63 peut alors être utilisé comme signal d'information de phase $S_1$.

**Revendications**

1. Dispositif de récupération d'un signal d'horloge locale H à partir d'un signal binaire S comportant un circuit oscillateur (5) à accord électronique ayant une entrée de commande d'accord et une sortie délivrant le signal d'horloge locale H; des premiers moyens logiques (3) ayant une première et une deuxième entrée recevant respectivement le signal binaire S et le signal d'horloge locale H, et une sortie délivrant un signal logique $S_1$ traduisant le signe de l'écart de phase entre les signaux S et H; et des seconds moyens logiques (4) ayant une première entrée, une deuxième entrée recevant le signal H, et ayant une sortie délivrant un signal logique $S_3$, comportant une bascule (9) et traduisant le signe de l'écart de fréquence entre les signaux S et H; un circuit de commutation (6) ayant une première et une deuxième entrée recevant respectivement les signaux logiques, $S_1$ et $S_3$ et ayant une sortie délivrant l'un des signaux $S_1$ et $S_3$; un circuit de commande (7), pour commander le circuit de commutation (6); et un circuit de commande (8) d'accord du circuit oscillateur (5) ayant une entrée couplée à la sortie du circuit de commutation (6), et une sortie couplée à l'entrée de commande du circuit oscillateur (5) et délivrant une tension de commande d'accord; caractérisé en ce que la bascule (9) a une entrée de données constituant ladite deuxième entrée des seconds moyens logiques (4), une entrée d'horloge constituant ladite première entrée des seconds moyens logiques (4), étant couplée à la sortie des premiers moyens logiques (3), et une sortie délivrant un signal intermédiaire d'information de fréquence $S_2$; que les seconds moyens logiques (4) comprennent en outre un filtre ($R_1$

et $C_1$) pour filtrer le signal $S_2$, ayant une sortie délivrant un signal $SF_2$; et un circuit de mise en forme logique (10 et 11) du signal $SF_2$, ayant une sortie, constituant la sortie des seconds moyens logiques (4), couplée à l'entrée du circuit de commande de commutation (7).

2. Dispositif selon la revendication 1, caractérisé en ce que les premiers moyens logiques (3) comportent une bascule ayant une entrée d'horloge recevant le signal S, une entrée de données couplée à la sortie du circuit oscillateur (5) et une sortie couplée à la première entrée des seconds moyens logiques (4) et à la première entrée du circuit de commutation (6), cette sortie délivrant le signal d'information de phase $S_1$.

3. Dispositif selon la revendication 1, caractérisé en ce que le circuit de commande de commutation (7) comporte une bascule (14) ayant une entrée d'horloge couplée à la sortie des seconds moyens logiques (4), une première et une deuxième sortie respectivement couplées à une première et une deuxième entrée de commande du circuit de commutation (6); cette bascule (14) commandant le circuit de commutation (6) en fonction des variations du signal $S_3$.

4. Dispositif selon la revendication 1, caractérisé en ce que le circuit de commande de commutation (7) comporte des moyens de comparaison (16 et 17) pour comparer la valeur absolue de la tension de commande du circuit oscillateur (5) par rapport à une valeur déterminée S'' et pour commander le circuit de commutation (6) afin qu'il délivre le signal $S_3$ lorsque cette valeur absolue de la tension de commande est supérieure à S''.

5. Dispositif selon la revendication 1, caractérisé en ce que les premiers moyens logiques (3) comportent: un détecteur (62) du passage de l'état x à l'état $\bar{x}$ du signal H suivant immédiatement chaque passage de l'état x à l'état $\bar{x}$ du signal binaire S, ayant des première et deuxième entrées recevant respectivement le signal H et le signal S; un dispositif à retard (61) de retard $1/2F_o$ ($F_o$ étant la fréquence du signal d'horloge locale désirée) ayant une entrée recevant le signal S; et un circuit logique (63) couplé au détecteur (62) et ayant des première et deuxième entrées recevant respectivement le signal S retardé et le signal H, et une sortie fournissant le signal d'information de phase $S_1$ dont l'état est celui du signal S retardé, mémorisé à l'instant auquel est détecté un passage du signal H de l'état x à l'état $\bar{x}$ par le détecteur (62).

6. Dispositif selon la revendication 1, caractérisé en ce qu'il comporte des moyens de couplage (72) ayant une entrée de commande, ces moyens de couplage (72) couplant la sortie du circuit de commande (8) à l'entrée de commande de circuit oscillateur (5); des moyens (C') de mémorisation de la tension de commande du circuit oscillateur (5) fournissant la tension de commande mémorisée lorsque les moyens de couplage interrompent la liaison entre la sortie du circuit de commande d'accord (8) et l'entrée de commande du circuit oscillateur (5); et des moyens de détection (71) de l'absence de transitions dans le signal binaire S ayant une sortie couplée à l'entrée de commande des moyens de couplage (72).

**Patentansprüche**

1. Vorrichtung zur Rückgewinnung eines lokalen Taktsignals H aus einem binären Signal S, mit einer Oszillatorschaltung (5), die mit elektronischer Abstimmung arbeitet und einen Abstimm-Steuereingang sowie einen Ausgang besitzt, der das lokale Taktsignal H abgibt; ersten logischen Mitteln (3), die einen ersten und einen zweiten Eingang aufweisen, von denen der erste das Binärsignal S und der zweite das lokale Taktsignal H empfängt, und einen Ausgang besitzen, der ein logisches Signal $S_1$ abgibt, welches das Vorzeichen der Phasenabweichung zwischen den Signal en S und H wieder gibt; und zweiten logischen Mitteln (4), die einen ersten Eingang, einen zweiten Eingang, der das Signal H empfängt, und einen Ausgang aufweisen, welcher ein logisches Signal $S_3$ abgibt, versehen mit einer Kippschaltung (9) und zur Angabe des Vorzeichens der Frequenzabweichung zwischen den Signalen S und H; einem Umschaltkreis (6), dessen erster Eingang das Logiksignal $S_1$ und dessen zweiter Eingang das Logiksignal $S_3$ empfängt und dessen Ausgang eines der Signale $S_1$ und $S_3$ abgibt; mit einer Steuerschaltung (7) zum Steuern des Umschaltkreises (6); und mit einer Abstimm-Steuerschaltung (8) zur Steuerung des Oszillators (5), die einen ersten, mit dem Ausgang des Umschaltkreises (6) gekoppelten Eingang und einen mit dem Steuereingang der Oszillatorschaltung (5) gekoppelten Ausgang aufweist und eine Abstimm-Steuerspannung abgibt; dadurch gekennzeichnet, daß die Kippschaltung (9) einen Dateneingang aufweist, welcher den genannten zweiten Eingang der zweiten logischen Mittel (4) bildet, einen Takteingang aufweist, welcher den genannten ersten Eingang der zweiten logischen Mittel (4) bildet und mit dem Ausgang der ersten logischen Mittel (3) gekoppelt ist, und einen Ausgang aufweist, welcher ein Zwischensignal zur Information über die Frequenz $S_2$ abgibt; daß die zweiten logischen Mittel (4) ferner ein Filter ($R_1$ und $C_1$) zum Filtern des Signals $S_2$ umfassen, mit einem Ausgang, der ein Signal $SF_2$ abgibt; und eine Formgebungsschaltung (10 und 11), um das Signal $SF_2$ in logische Form zu bringen, mit einem Ausgang, welcher den Ausgang der zweiten logischen Mittel (4) bildet und an den Eingang der Umschalt-Steuerschaltung (7) angekoppelt ist.

2. Vorrichtung nach Anspruch 1, dadurch gekennzeichnet, daß die ersten logischen Mittel (3) eine Kippschaltung enthalten, die einen das Signal S empfangenden Takteingang, einen mit dem Ausgang der Oszillatorschaltung (5) verbundenen Dateneingang und einen Ausgang aufweist, welcher mit dem ersten Eingang der zweiten logischen Mittel (4) und mit dem ersten Eingang des Umschaltkreises (6) verbunden ist, wobei dieser Ausgang das Phaseninformationssignal $S_1$ abgibt.

3. Vorrichtung nach Anspruch 1, dadurch gekennzeichnet, daß die Umschalt-Steuerschaltung (7) eine Kippschaltung (14) umfaßt, die einen mit dem Ausgang der zweiten logischen Mittel (4) verbundenen Takteingang, einen ersten und einen zweiten Ausgang aufweist, von denen der erste mit einem ersten Steuereingang und der zweite mit einem zweiten Steuereingang des Umschaltkreises (6) verbunden ist; wobei diese Kippschaltung (14) den Umschaltkreis (6) in Abhängigkeit von den Änderungen des Signals $S_3$ steuert.

4. Vorrichtung nach Anspruch 1, dadurch gekennzeichnet, daß die Umschalt-Steuerschaltung (7) Komparatormittel (16 und 17) umfaßt, um den Absolutwert der Steuerspannung der Oszillatorschaltung (5) mit einem bestimmten Wert S" zu vergleichen und den Umschaltkreis (6) zu steuern, damit dieser das Signal $S_3$ abgibt, wenn dieser Absolutwert der Steuerspannung größer als S" ist.

5. Vorrichtung nach Anspruch 1, dadurch gekennzeichnet, daß die ersten logischen Mittel (3) umfassen: einen Detektor (62) für die Erfassung des Übergangs des Signals H vom Zustand x in den Zustand $\bar{x}$ unmittelbar nach jedem Übergang des Binärsignals S vom Zustand x in den Zustand $\bar{x}$, mit einem ersten Eingang, der das Signal H empfängt, und einem zweiten Eingang, der das Signal S empfängt; eine Verzögerungsvorrichtung (61), deren Verzögerung $1/2F_o$ beträgt (worin $F_o$ die Frequenz des gewünschten lokalen Taktsignals ist), mit einem das Signal S empfangenden Eingang; und eine logische Schaltung (63), welche an den Detektor (62) angekoppelt ist und deren erster Eingang das verzögerte Signal S und deren zweiter Eingang das Signal H empfängt und deren Ausgang das Phaseninformationssignal $S_1$ liefert, dessen Zustand derjenige des verzögerten Signals S ist, welches zu demjenigen Zeitpunkt gespeichert wurde, bei welchem ein Übergang des Signals H vom Zustand x in den Zustand $\bar{x}$ durch den Detektor (62) festgestellt wurde.

6. Vorrichtung nach Anspruch 1, dadurch gekennzeichnet, daß sie Kopplungsmittel (72) umfaßt, die einen Steuereingang aufweisen, wobei diese Kopplungsmittel (72) den Ausgang der Steuerschaltung (8) mit dem Steuereingang der Oszillatorschaltung (5) verbinden; Speichermittel (C') zum Speichern der Steuerspannung der Oszillatorschaltung (5) umfaßt, welche die gespeicherte Steuerspannung liefern, wenn die Kopplungsmittel die Verbindung zwischen dem Ausgang der Abstimm-Steuerschaltung (8) und dem Steuereingang der Oszillatorschaltung (5) unterbrechen; und Detektormittel (71) umfaßt, um das Ausbleiben von Übergängen in dem binären Signal S festzustellen, mit einem Ausgang, welcher an den Steuereingang der Kopplungsmittel (72) angekoppelt ist.

## Claims

1. Device for the recovery of a local clock signal H from a binary signal S, comprising an electronically tuned oscillator circuit (5) having a tuning control input and an output supplying the local clock signal H; first logic means (3) having a first and a second input receiving the binary signal S and the local clock signal H, respectively, and an output supplying a logic signal $S_1$ representing the sign of the phase deviation between the signals S and H; and second logic means (4) having a first input, a second input receiving the signal H and an output supplying a logic signal $S_3$, comprising a bistable member (9) and indicating the sign of the frequency deviation between the signals S and H; a switching circuit (6) having a first and a second input receiving the logic signals $S_1$ and $S_3$, respectively, and having an output supplying one of the signals $S_1$ and $S_3$; a control circuit (7) for controlling the switching circuit (6); and a tuning control circuit (8) of the oscillator circuit (5) having an input coupled to the output of the switching circuit (6) and an output coupled to the control input of the oscillator circuit (5) and supplying a tuning control voltage; characterized in that the bistable member (9) has a data input forming said second input of the second logic means (4), a clock input forming said first input of the second logic means (4) and being coupled to the output of the first logic means (3), and an output supplying an intermediate information signal relating to the frequency $S_2$; that said second logic means (4) further comprise a filter ($R_1$ and $C_1$) for filtering the signal $S_2$, and having an output supplying a signal $SF_2$; and a circuit (10 and 11) for logically shaping the signal $SF_2$ and having an output forming the output of the second logic means (4) and coupled to the input of the switching control circuit (7).

2. Device according to claim 1, characterized in that the first logic means (3) comprise a bistable member having a clock input receiving the signal S, a data input coupled to the output of the oscillator circuit (5) and an output coupled to the first input of the second logic means (4) and to the first input of the switching circuit (6), this output supplying the phase information signal $S_1$.

3. Device according to claim 1, characterized in that the switching control circuit (7) comprises a bistable member (14) having a clock input coupled to the output of the second logic means (4), a first and a second output coupled to a first and a second control input, respectively, of the switching circuit (6); this bistable member (14) controlling the switching circuit (6) as a function of the variation of the signal $S_3$.

4. Device according to claim 1, characterized in that the switching control circuit (7) comprises comparing means (16 and 17) for comparing the absolute value of the control voltage of the oscillator circuit (5) to a determined value S" and for controlling the switching circuit (6) in such a manner that it supplies the signal $S_3$ when this absolute value of the control voltage exceeds S".

5. Device according to claim 1, characterized in that the first logic means (3) comprise: a detector (62) for detecting the change of the signal H from the state x to the state x̄ immediately following each change of the binary signal S from the state x to the state x̄, having first and second inputs receiving the signal H and the signal S, respectively; a delay device (61) having the delay $1/2F_o$ ($F_o$ being the frequency of the desired local clock signal) having an input receiving the signal S; and a logic circuit (63) coupled to the detector (62) and having first and second inputs receiving the delayed signal S and the signal H, respectively, and an output supplying the phase information signal $S_1$ the state of which is that of the delayed signal S, stored at the moment where a change of the signal H from the state x to the state x̄ is detected by the detector (62).

6. Device according to claim 1, characterized in that it comprises coupling means (72) having a control input, these coupling means (72) coupling the output of the control circuit (8) to the control input of the oscillator circuit (5); means (C') for storing the control voltage of the oscillator circuit (5) and supplying the stored control voltage when the coupling means interrupt the connection between the output of the tuning control circuit (8) and the control input of the oscillator circuit (5); and detection means (71) for detecting the absence of transitions within the binary signal S and having an output coupled to the control input of the coupling means (72).

0 053 959

## FIG_1

## FIG_9

## FIG_10

1

FIG_2

## FIG_3

H

S

S₁

## FIG_4

H

S

S₁

0053959

F>F0 FIG_5

F<F0 FIG_6

0053959

# FIG_7

0053 959

FIG_8

# FIG_11